# EUROPÄISCHE PATENTSCHRIFT

(11) **EP 1 401 979 B1**
(45) Veröffentlichungstag und Bekanntmachung des Hinweises auf die Patenterteilung: **16.08.2006**
(21) Anmeldenummer: 02730174.6
(22) Anmeldetag: 18.04.2002
(51) Int. Cl.: C09J 7/04, B65H 19/29, C09J 7/02

(54) **ABSCHLUSSBANDAGE**
CLOSING BANDING
GARNITURE FINALE DE BOBINE

(30) Priorität: 17.05.2001 DE 10123980
(43) Veröffentlichungstag der Anmeldung: 31.03.2004
(73) Patentinhaber: tesa AG, 20253 Hamburg (DE)
(72) Erfinder: WIENBERG, Uwe, 25436 Uetersen (DE)
(86) Internationale Anmeldenummer: PCT/EP2002/004285
(87) Internationale Veröffentlichungsnummer: WO 2002/092713

(56) Entgegenhaltungen:
- EP-A- 0 970 904
- US-A- 5 996 927

## Beschreibung

Die Erfindung betrifft eine Abschlussbandage für eine Bobine, insbesondere für eine solche aus Zigarettenpapier.

Verbreitet werden Bobinen verwendet, zu schmalen Rollen gewickeltes dünnes Material, insbesondere Papier. So werden schmale Rollen von Zigarettenpapier in großem Umfang verarbeitet, in der Regel als Zigarettenpapierrollen von 26,5 mm Breite. Diese werden schon in der Papierfabrik hergestellt und mit Ansatzklebebändern ausgerüstet, um die oberste Lage zu sichern und einen problemlosen Transport und späteren Einsatz zu ermöglichen. Diese Ansatzklebebänder werden in Fachkreisen als "Schlösser" bezeichnet und bestehen aus etwa 180 mm langen und 26,5 mm breiten Klebeetiketten mit Papierträger und einem Anfasser, an dem das Etikett ergriffen werden kann, insbesondere auch maschinell, um es von der zweiten Lage abzureißen und die Bobine in eine Maschine, insbesondere eine Zigarettenmaschine einzuführen.

Roboter dieser Art laufen außerordentlich schnell und benötigen entsprechenden Nachschub. So ist es in der Regel etwa alle 5 Minuten notwendig, eine neue Zigarettenpapierrolle einzusetzen, und entsprechend oft ist ein problemloses Befestigen und Halten der obersten Lage einer solchen Rolle nötig, bis diese dann wiederum problemlos und schnell freigelegt werden muss.

Gerade bei empfindlichen, leichten Papieren, wie dies bei Zigarettenpapier mit einem Flächengewicht von etwa 13 g/m² der Fall ist, ist dabei darauf zu achten, dass beim Öffnen der Bobine, also beim Abziehen des Etiketts, die ansetzende Reißkraft nicht dazu führt, dass sich die Papierlage abhebt und ggf. reißt. Es ist darum üblich, die oberste Lage mit einem Packpapier zu überdecken, das an das Zigarettenpapier angeklebt wird und vor dem eigentlichen Einsatz in der Zigarettenmaschine abgeschlagen bzw. abgeschnitten und entsorgt wird.

Diese oberste Lage gilt es gleichwohl zu befestigen und zu halten - hier setzt die vorliegende Erfindung an.

Denn es ist eine feinsinnige Gratwanderung nötig, um das sensible Material - das Zigarettenpapier- in geeigneter Weise zu handhaben, da die Bobinen daraus je nach äußeren Bedingungen Veränderungen unterliegen und sozusagen "arbeiten", etwa bei unterschiedlichen Feuchtigkeitsgehalt der Umgebung, bei Temperaturschwankungen etc. so dass das zur Sicherung verwendete Etikett auch diesen Belastungen stand halten muss.

Zudem ist es erwünscht, dass das Lösen der Sicherung bzw. des Etiketts leicht und ohne Materialschädigungen erfolgen kann, ohne aber die Funktion einer Befestigung der obersten Lage zu beeinträchtigen. Und es ist auch erwünscht, dass nach dem Lösen und Einführen in die Zigarettenmaschine oder dergleichen keine klebenden Bereiche stören und zu Problemen führen. Schließlich ist auch erwünscht, dass alle Komponenten "sortenrein", also aus Papier bzw. aus Materialien bestehen, die zusammen mit Papier nicht stören, also ggf. wasserlöslich bzw. zusammen mit Papier recyclebar sind.

Weiterhin ist erwünscht, dass Bobinen mit Hilfsmaterialien bzw. anderen einzusetzenden Materialien als Papier - wie bei der Zigarettenherstellung eingesetzte Alu-Folie, Verpackungsfolie etwa aus PP, Karton und dergleichen - in der gleichen Weise gesichert ausgerüstet und geöffnet werden können.

Bekannt sind dafür selbstklebende Etiketten bzw. Selbstklebebänder, die leicht "geöffnet" werden können, indem an einem vorgesehenen Anfasser gezogen wird und die Verklebung über punktförmige Klebstellen gelöst wird, wie dies etwa von mit punktförmigen Klebstellen ausgerüsteten, reversibel verklebbaren Haftnotizzettel bekannt ist. Dabei wird sowohl das Ende der obersten Lage als auch die darunter liegende zweite Lage überklebt. Das Lösen der Verklebung erfolgt jedoch entweder in allzu leichter Weise, so dass auch ein ungewolltes Lösen erfolgen kann, oder zu schwer, je nach Material und Klebkraft. Und auch klebende Bereiche der gelösten Lagen stören beim weiteren Ablauf.

Bekannt sind auch Klebebänder mit spaltfähigem Papierträger, die für Rollenwechsel, insbesondere fliegende Rollenwechsel eingesetzt werden, um an eine ablaufende Bahn, etwa Papierbahn, eine neue Maschine anhalten zu müssen, wobei der spaltfähige Papierträger spaltet und mit seinen Resten die Verklebungsstellen nicht-klebend abdeckt. Dabei handelt es sich um beidseitig klebende Klebebänder, die unter oder über das Ende der obersten Lagen und zugleich auf die zweite, darunter liegende Lage geklebt werden, vgl. **US 5,702,555, DE 196 28 317A1, DE 196 32 689 A1, DE 198 30 673 A1, DE 198 30 674 A1, DE 199 02 179 A1.**

Die in diesen Druckschriften beschriebenen doppelseitig klebenden Klebebänder eignen sich für die Sicherung der hier angesprochenen Bobinen nur bedingt, zumal diese ja nicht für einen fliegenden Rollenwechsel eingesetzt werden sollen, vielmehr für eine Befestigung der obersten Lage zum Transport etc. sowie zum leichten, aber nicht ungewollten und problemlosen Öffnen - das Ansetzen an eine auslaufende Bahn bzw. das Einführen in eine Verarbeitungsmaschine erfolgt erst daran anschließend und ist nicht Gegenstand des hier behandelten technischen Problems.

Aufgabe der Erfindung war es damit, für das Befestigen und Halten der obersten Lage einer Bobine sowie für das spätere leichte und problemlose Lösen dieser Halterung eine Lösung zu finden, die die bisher auftretenden Schwierigkeiten umgeht oder vermindert.

Demgemäss betrifft die Erfindung eine Abschlussbandage, wie sie näher in den Ansprüchen gekennzeichnet ist.

Dabei wird erfindungsgemäß ein einseitig klebendes Produkt vorgeschlagen, nicht ein beidseitig klebendes, wie es etwa für den fliegenden Rollenwechsel bekannt ist.

Um unnötige Wiederholungen zu vermeiden, wird ausdrücklich auch auf die Unteransprüche Bezug genommen.

Erfindungsgemäß gelingt das Befestigen der obersten Lage einer Bobine aus Zigarettenpapier, sicher und dauerhaft, Temperatur- und Feuchtigkeitsschwankungen werden gut vertragen und auch das spätere Lösen zum Einführen in die Zigarettenmaschine gelingt problemlos, ohne dass es zu ungewolltem Öffnen bzw. Lösen der Verklebung kommt. Störende Klebebereiche entstehen nicht, entsorgt wird ohne Probleme, ein sortenreines Arbeiten ist gewährleistet.

Als spaltfähige Papierträger kommen diverse spaltbare Papiersysteme in Frage, wie
- Duplexpapiere (definiert zusammen laminierte Papiere, der Spaltvorgang verläuft extrem homogen, es entstehen keine Spannungsspitzen, z.B. durch inhomogene Verdichtung. Diese Papiere werden zur Herstellung von Tapeten und Filtern eingesetzt.
- Leicht spaltbare Papiersysteme
- Definiert zusammen geleimte hochverdichtete Papiere (⇒ Papier mit einer hohen Spaltfestigkeit). Die Leimung kann beispielsweise mit Stärke, stärkehaltigen Derivaten, Tapetenkleister auf Basis von Methylcellulose (Methylan®, Henkel KGaA, Düsseldorf) aber auch auf Basis von Polyvinylalkoholen erfolgen.
   Als Selbstklebemasse kommen alle typischen Haftklebemassen in Frage, insbesondere
- Acrylate (wasserlöslich und nicht wasserlöslich)
- Naturkautschukmassen, Synthesekautschukmassen

Die Zeichnungen zeigen schematische Darstellungen von erfindungsgemäßen Abschlussbandagen im Querschnitt und sollen die Erfindung beispielhaft erläutern. Die Bezugszeichen sind in den Ansprüchen erläutert.

Es zeigen:
- Figur 1:: Eine schematische Seitenansicht einer Bobine mit Abschlussbandage.
- Figur 2:: Eine Schrägansicht einer Bobine gemäß Figur 1.
- Figur 3:: Einen Querschnitt durch eine erfindungsgemäße Abschlussbandage.
- Figur 4:: Einen schematischen Querschnitt durch einen Teil einer Bobine gem. Figur 1.
- Figur 5.: Eine aufgerissene Bobine gemäß Figur 4, und
- Figur 6:: Eine weitere Ausgestaltung einer erfindungsgemäßen Abschlussbandage im Querschnitt.

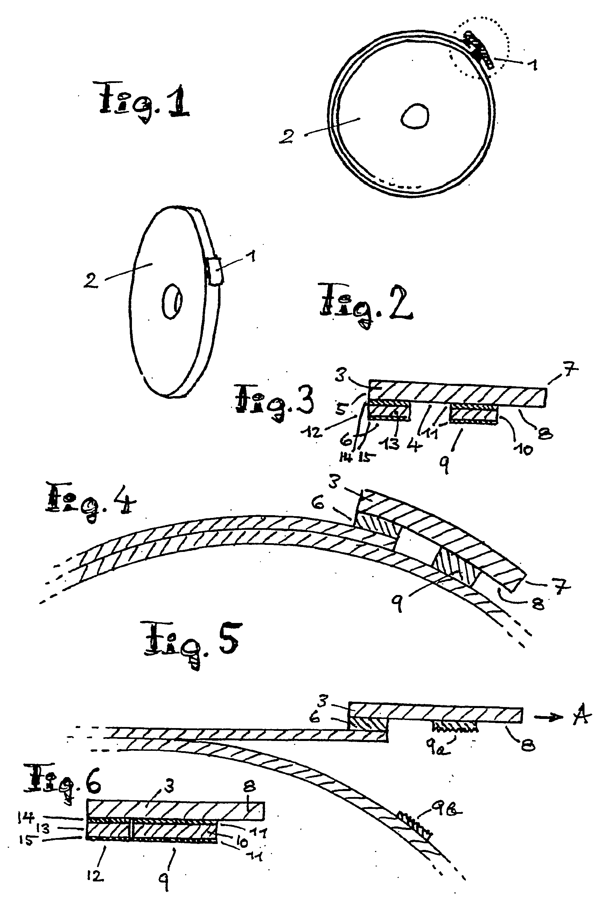

Im Einzelnen zeigen die Figuren 1 - 6 eine Bobine 2 mit einer Abschlussbandage 1, diese wiederum mit einem Papierträger 3, an dessen Unterseite 4 sich im Bereich der oberen Querkante 5 (links in Figur 3) eine Selbstklebemasse 6 befindet, während sich im Bereich der unteren Querkante 7 ein nicht-klebender Anfasser 8 befindet. Ebenfalls in diesem Bereich der unteren Querkante, jedoch durch den Anfasser 8 von dieser getrennt, befindet sich ein doppelseitig klebendes Klebeband 9 mit einem spaltfähigen Papierträger 10, der beidseitig mit Selbstklebemasse 11 beschichtet ist. Auch die Selbstklebemasse 6 ist in Form eines doppelseitig klebenden Klebebandes 12 ausgestaltet, mit reißfestem Papierträger 13 und Selbstklebemassen 14, 15 beidseits. In einer weiteren, nicht dargestellten Ausführungsform ist die Selbstklebemasse 6 in Form einer "reinen" Selbstklebemasse vorgesehen, d.h. als ein einheitlicher Streifen einer Selbstklebemasse, trägerlos und Klebstoff pur. Derartige Produkte sind z.B. als tesa fix 51916 im Handel (tesa AG). Geeignete Dicke dieser trägerlosen Selbstklebemasse ist 60 µm. Der Anfasser ist 15 mm lang, die gesamte Abschlussbandage ist 180 mm lang, das Klebeband 12 ist 25 mm breit, das Klebeband 9 ist 25 mm breit. Die Spaltfestigkeit des Papierträgers 10 beträgt 33 - 44 c/N/cm. (Duplex Filterpapier, Flächengewicht 51 g/m², Dicke 90 µm). Der Papierträger 3 besteht aus Streichrohpapier mit einem Flächengewicht von 95 g/m², ebenso der Papierträger 13.

## Patentansprüche

1. Abschlussbandage (1) für eine Bobine (2), insbesondere für eine Bobine (2) aus Zigarettenpapier, mit
a) einem Papierträger (3), der an seiner Unterseite (4) im Bereich der oberen Querkante (5) mit einer Selbstklebemasse (6) beschichtet ist, und
b) im Bereich der unteren Querkante (7) - der oberen Querkante (5) gegenüberliegend - einen nicht-klebenden Anfasser (8) aufweist,
**gekennzeichnet durch**
c) ein doppelseitig klebendes Klebeband (9), das an der Unterseite (4) des Papierträgers (3) zwischen der Selbstklebemasse (6) und dem Anfasser (8) angeordnet ist, wobei
d) das doppelseitig klebende Klebeband (9) einen spaltfähigen Papierträger (10) aufweist, der beidseitig mit Selbstklebemasse (11) beschichtet ist.

2. Abschlussbandage nach Anspruch 1, **dadurch gekennzeichnet dass** die Selbstklebemasse (6) eine solche für eine permanente (nicht reversible) Verklebung ist.

3. Abschlussbandage nach Anspruch 1, **dadurch gekennzeichnet, dass** die Selbstklebemasse (6) aus einem aufkaschierten doppelseitig klebenden Klebeband (12) besteht, insbesondere einem solchen mit reißfestem Papierträger (13) und stark klebenden Selbstklebemasse (14, 15) auf beiden Seiten, oder die Selbstklebemasse (6) besteht aus einer trägerlosen Selbstklebemasse.

4. Abschlussbandage nach Anspruch 1, **dadurch gekennzeichnet, dass** die Selbstklebemassen (6, 11, 14, 15) Haftklebemassen auf Basis von Acrylaten oder Kautschuk sind, insbesondere wasserlöslich sind.

5. Abschlussbandage nach Anspruch 1, **dadurch gekennzeichnet, dass** die Länge des Anfassers (8) 10 - 25 mm, insbesondere 12 - 18 mm beträgt, gemessen von der unteren Querkante (7)).

6. Abschlussbandage nach Anspruch 1, **dadurch gekennzeichnet, dass** diese in Form eines ggf. zur Rolle gewickelten Klebebandes vorliegt, insbesondere mit einer Breite von 20 - 2000 mm, insbesondere 22 - 1500 mm, die bevorzugt an der Breite der zu sichernden Mutterrolle ausgerichtet ist, bevor diese zu Bobinen (2) geschnitten wird.

7. Abschlussbandage nach Anspruch 1, **dadurch gekennzeichnet, dass** die Breite der Selbstklebemasse (6) (gemessen von einer Querkante 5, 7)), 20 - 100 mm, insbesondere 25 - 60 mm beträgt und die Breite des doppelseitig klebenden Klebebandes (9) (gemessen von einer Querkante (5, 7)) 10 -100 mm, insbesondere 15 - 50 mm beträgt.

8. Abschlussbandage nach Anspruch 1, **dadurch gekennzeichnet, dass** die Spaltfestigkeit des spaltfähigen Papierträgers (10) 20 - 70 cN/cm, insbesondere 22 - 60 cN/cm, vor allem 25 - 50 cN/cm beträgt.

9. Abschlussbandage nach Anspruch 1, **dadurch gekennzeichnet, dass** sie in Form von einzelnen Etiketten vorliegt, die ggf. auf einem Hilfsträger angeordnet sind, wobei die Etiketten-Breite der Breite der zu beklebenden Bobine entspricht.

10. Verwendung einer Abschlussbandage nach einem der Ansprüche 1 - 9, auf einer Bobine, insbesondere auf einer Bobine aus Zigarettenpapier, wobei das Ende der obersten Lage der Bobine an der darunter liegenden zweiten Lage befestigt wird, indem die Abschlussbandage mittels der Selbstklebemasse im Bereich der oberen Querkante derart auf das Ende der obersten Lage geklebt wird, dass die Abschlussbandage über dieses Ende ragt und mittels der Selbstklebemasse auf dem spaltfähigen Papierträger auf die zweite Lage geklebt wird, um dann durch Ziehen an dem überstehenden Anfasser die oberste Lage von der zweiten Lage zu trennen, indem der spaltfähige Papierträger spaltet und so das freigewordene Ende in eine Maschine, insbesondere eine Zigarettenmaschine, eingeführt werden kann.

## Claims

1. Closing banding (1) for a bobbin (2), in particular for a bobbin (2) of cigarette paper, comprising
a) a paper carrier (3) which is coated with a self-adhesive compound (6) on its underside (4) in the region of the upper transverse edge (5), and
b) has a non-adhesive tab (8) in the region of the lower transverse edge (7), opposite the upper transverse edge (5),
**characterized by**
c) a double-sided adhesive tape (9) which is arranged on the underside (4) of the paper carrier (3), between the self-adhesive compound (6) and the tab (8),
d) the double-sided adhesive tape (9) having a cleavable paper carrier (10) which is coated on both sides with self-adhesive compound (11).

2. Closing banding according to Claim 1, **characterized in that** the self-adhesive compound (6) is one for permanent (irreversible) bonding.

3. Closing banding according to Claim 1, **characterized in that** the self-adhesive compound (6) comprises a double-sided adhesive tape (12) laminated on, in particular one with tear-resistant paper carrier (13) and highly adhesive self-adhesive compound (14, 15) on both sides, or the self-adhesive compound (6) consists of a carrier-less self-adhesive compound.

4. Closing banding according to Claim 1, **characterized in that** the self-adhesive compounds (6, 11, 14, 15) are contact adhesive compounds based on acrylates or rubber, in particular are water-soluble.

5. Closing banding according to Claim 1, **characterized in that** the length of the tab (8) is 10 - 25 mm, in particular 12 - 18 mm, measured from the lower transverse edge (7)).

6. Closing banding according to Claim 1, **characterized in that** this is present in the form of an adhesive tape, possibly wound up into a roll, in particular with a width of 20 - 2000 mm, in particular 22 - 1500 mm, which is preferably aligned with the width of the parent reel to be secured before the latter is cut up into bobbins (2).

7. Closing banding according to Claim 1, **characterized in that** the width of the self-adhesive compound (6)(measured from a transverse edge 5,7)) is 20 - 100 mm, in particular 25 - 60 mm, and the width of the double-sided adhesive tape (9) (measured from a transverse edge (5,7)) is 10 - 100 mm, in particular 15 - 50 mm.

8. Closing banding according to Claim 1, **characterized in that** the cleavage strength of the cleavable paper carrier (10) is 20 - 70 cN/cm, in particular 22 - 60 cN/cm, above all 25 - 50 cN/cm.

9. Closing banding according to Claim 1, **characterized in that** it is present in the form of individual labels which, if appropriate, are arranged on an auxiliary carrier, the label width corresponding to the width of the bobbin to be bonded.

10. Use of a closing banding according to one of Claims 1 - 9 on a bobbin, in particular on a bobbin of cigarette paper, the end of the uppermost layer of the bobbin being fixed to the second layer located underneath by the closing banding being bonded to the end of the uppermost layer by means of the self-adhesive compound in the region of the upper transverse edge, in such a way that the closing banding projects beyond this end and, by means of the self-adhesive compound on the cleavable paper carrier, being bonded to the second layer, in order then to separate the uppermost layer from the second layer by pulling on the projecting tab, by the cleavable paper carrier cleaving and in this way the liberated end being capable of insertion into a machine, in particular a cigarette machine.

## Revendications

1. Garniture de fermeture (1) pour une bobine (2), en particulier une bobine (2) de papier à cigarettes, comportant
a) un support en papier (3), lequel est revêtu sur sa face inférieure (4) d'une masse auto-adhésive (6) dans la zone du bord transversal en amont (5), et
b) présente une prise (8) non adhésive dans la zone du bord transversal en aval (7), du côté opposé au bord transversal en amont (5),
**caractérisée par**
c) une bande adhésive (9) sur les deux faces, laquelle est disposée sur la face inférieure (4) du support en papier (3), entre la masse auto-adhésive (6) et la prise (8),
d) la bande adhésive (9) sur les deux faces présentant un support en papier (10) susceptible d'être dédoublé, lequel est revêtu des deux côtés d'une masse auto-adhésive (11).

2. Garniture de fermeture selon la revendication 1, **caractérisée en ce que** la masse auto-adhésive (6) est une masse pour un collage permanent (non réversible).

3. Garniture de fermeture selon la revendication 1, **caractérisée en ce que** la masse auto-adhésive (6) est constituée d'une bande adhésive (12) contrecollée sur les deux faces, en particulier une bande adhésive comportant un support en papier (13) résistant à l'arrachement et une masse auto-adhésive (14, 15) à forte adhérence des deux côtés, ou d'une masse auto-adhésive (6) sans support.

4. Garniture de fermeture selon la revendication 1, **caractérisée en ce que** les masses auto-adhésives (6, 11, 14, 15) sont des masses auto-adhésives à base d'acrylates ou de caoutchouc et sont en particulier solubles dans l'eau.

5. Garniture de fermeture selon la revendication 1, **caractérisée en ce que** la longueur de la prise (8) est de 10 - 25 mm, en particulier de 12 - 18 mm, mesurée à partir du bord transversal en aval (7).

6. Garniture de fermeture selon la revendication 1, **caractérisée en ce que** celle-ci se présente en forme de bande adhésive enroulée le cas échéant en rouleau, en particulier d'une largeur de 20 - 2000 mm, en particulier de 22 - 1500 mm, laquelle est de préférence ajustée à la largeur du rouleau mère à fermer, avant que celui-ci soit coupé en bobines (2).

7. Garniture de fermeture selon la revendication 1, **caractérisée en ce que** la largeur de la masse auto-adhésive (6) (mesurée à partir d'un bord transversal 5, 7) est de 20 - 100 mm, en particulier de 25 - 60 mm, et la largeur de la bande adhésive sur les deux faces (9) (mesurée à partir d'un bord transversal (5, 7)) est de 10 - 100 mm, en particulier de 15 - 50 mm.

8. Garniture de fermeture selon la revendication 1, **caractérisée en ce que** la résistance au dédoublement du support en papier (10) susceptible d'être dédoublé est de 20 - 70 cN/cm, en particulier de 22 - 60 cN/cm, avant tout de 25 - 50 cN/cm.

9. Garniture de fermeture selon la revendication 1, **caractérisée en ce qu'**elle se présente en forme d'étiquettes individuelles, lesquelles sont disposées le cas échant sur un support auxiliaire, la largeur des étiquettes correspondant à la largeur de la bobine à coller.

10. Utilisation d'une garniture de fermeture selon l'une quelconque des revendications 1 à 9 sur une bobine, en particulier sur une bobine de papier à cigarettes, l'extrémité de la couche supérieure de la bobine étant fixée à la deuxième couche sous-jacente, la garniture de fermeture étant collée au moyen de la masse auto-adhésive à l'extrémité de la couche supérieure dans la zone du bord transversal en amont, de telle sorte que la garniture de fermeture dépasse de ladite extrémité et soit collée au moyen de la masse auto-adhésive sur la deuxième couche sur le support en papier susceptible d'être dédoublé, afin de séparer ensuite la couche supérieure de la deuxième couche par traction sur la prise en saillie, le support en papier susceptible d'être dédoublé se dédoublant et l'extrémité libérée pouvant ainsi être introduite dans une machine, en particulier une machine à cigarettes.
